# EUROPEAN PATENT APPLICATION

(11) **EP 1 938 895 A1**
(43) Date of publication of application: **02.07.2008**
(21) Application number: 07114352.3
(22) Date of filing: 14.08.2007
(51) Int. Cl.: B01J 23/63, B01J 35/04, B01J 37/02, B01D 53/00

(54) **Catalyst containing little or no rhodium for purifying exhaust gases of internal combustion engine**

(30) Priority: 16.08.2006 KR 20060077298
(71) Applicant: Heesung Catalysts Corporation, Kyongki-do Shiheung-city 429-450 (KR)
(72) Inventor: Han, Hyun-Sik, 425-870, Ansan-City, kyongki-do (KR); Song, Jin-Woo, 429-450, Shiheung-City, kyongki-do (KR); Ha, Jae-Au, 423-050, Gwangmyeong-city, kyongki-do (KR); Lee, Kwi-Yeon, 429-450, Shiheung-City, kyongki-do (KR)
(74) Representative: Callon de Lamarck, Jean-Robert

(57) **Abstract**

Disclosed herein is a three-way conversion (TWC) catalyst containing little or no rhodium for purifying exhaust gases of an internal combustion engine, having a multi-layers structure, including a lower layer including an alumina support and an oxygen storage material; an intermediate layer including alumina support impregnated only with palladium and a zirconia-rich oxygen storage material; and an upper layer including alumina support impregnated with platinum, minimum rhodium and platinum, or platinum-palladium and a ceria-rich oxygen storage material.

## Description

### BACKGROUND OF THE INVENTION

### 1. Field of the Invention

The present invention relates to a catalyst for purifying the exhaust gases of an internal combustion engine, and, particularly, to a catalyst containing little or no rhodium for purifying the exhaust gases of an internal combustion engine, which is a catalyst of a type commonly called a "Three-Way Conversion (TWC)" catalyst, and which can improve the reduction of nitrogen oxides (NOx) and the oxidation of hydrocarbons (HC) and carbon monoxide (CO).

### 2. Description of the Related Art

Generally, Three-Way Conversion (TWC) catalysts are useful in various fields, including the purification of pollutants such as nitrogen oxides (NOx), hydrocarbons (HC) and carbon monoxide (CO), which are discharged from internal combustion engines such as gasoline fuel engines for automobiles and other purposes. The TWC catalyst is multi-functional in that it can simultaneously catalyze the oxidation of HC and CO and the reduction of NOx. Emission standards for NOx, CO and unburned HC pollutants have been set by various countries and must be met by new vehicles. In order to meet such standards, catalytic converters containing a TWC catalyst are located in the exhaust gas line of internal combustion engines. Such catalysts promote the oxidation of unburned HC and CO by oxygen as well as the reduction of NOx. For example, techniques for purifying automobile exhaust gases, which store oxygen to facilitate the reduction of NOx somewhat during lean operation, and discharge the stored oxygen to promote the oxidation of HC and CO during rich operation, thereby treating exhaust gases of engines, are commonly known.

TWC catalysts having good catalytic activity and long life include one or more platinum group metals such as platinum (Pt), palladium (Pd), rhodium (Rh) and ruthenium (Ru). These TWC catalysts are used with a refractory oxide support having a large surface area, such as a piece of alumina coating material having a large surface area, etc. The support is carried on a suitable carrier or substrate, such as a monolithic carrier comprising a refractory ceramic or metal honeycomb structure, or refractory particles such as spheres or short, extruded segments of a suitable refractory material. Generally, these TWC catalysts are used with oxygen storage components, including alkaline earth metal oxides such as calcium oxides (CaO), strontium oxides (SrO) and barium oxides (BaO), alkali metal oxides such as potassium oxides (K₂O), sodium oxides (Na₂O), lithium oxides (Li₂O) and cesium oxides (Cs₂O), and rare earth metal oxides such as cerium oxides, lanthanum oxides, praseodymium oxides and neodymium oxides.

The large surface area alumina support materials, also commonly called "gamma alumina" or "activated alumina", typically have a BET (Brunauer, Emmett and Teller) surface area of 60 m²/g or more. Such activated alumina is usually a mixture of the gamma and delta phases of alumina, but may also contain substantial amounts of eta, kappa and theta alumina phases. The use of refractory metal oxides other than activated alumina as a support for at least some of the catalytic components in a given catalyst has been disclosed.

Rhodium has been known as an essential component of the TWC catalyst composition, and many conventional technologies taking advantage of this fact have been disclosed.

U.S. Patent No. 4,294,726 discloses a TWC catalyst composition containing platinum and rhodium, which is obtained by impregnating a gamma alumina carrier material with an aqueous solution containing cerium, zirconium and iron salts, or mixing the carrier material with the respective oxides of cerium, zirconium and iron, tempering the carrier material in air at a temperature of 500**°**C **~** 700**°**C, and then impregnating the carrier with an aqueous solution of a salt of platinum and a salt of rhodium, drying and subsequently treating with flowing gas containing hydrogen at a temperature of 250°C ~ 650°C.

Japanese Unexamined Patent Publication No. 1985-19036 discloses a catalyst for purifying exhaust gases, which has improved carbon monoxide removal performance. The catalyst includes a cordierite substrate and two alumina layers laminated on the surface of the substrate. The lower alumina layer includes platinum or vanadium deposited thereon, and the upper alumina layer includes rhodium and platinum or rhodium and palladium.

Japanese Unexamined Patent Publication No. 63-205141 discloses a catalyst for purifying exhaust gas, which includes the lower layer, including platinum or platinum and rhodium, dispersed on an alumina carrier containing rare earth oxides and the upper coating layer, including palladium and rhodium, dispersed on a carrier containing alumina, zirconia and rare earth oxides.

Meanwhile, U.S. Patent No. 4,587,231 discloses a method of producing a three-way catalyst for purifying exhaust gases.

Although rhodium-containing catalyst compositions for purifying exhaust gases of an internal combustion engine can be found in many other patent documents, a catalyst composition for purifying exhaust gases of an internal combustion engine which improves the oxidation of hydrocarbons (HC) and carbon monoxide (CO) and the reduction of nitrogen oxides (NOx) using the synergistic effect of a precious metal, such as platinum-palladium or palladium, and an oxygen storage material, without using rhodium, has not been disclosed anywhere.

### SUMMARY OF THE INVENTION

In conventional TWC catalysts, rhodium has been commonly known as a material for improving the reduction of nitrogen oxides (NOx), and has also been known as an essential component for suitably maintaining the function of TWC catalysts. However, as the price of rhodium has fluctuated sharply, the necessity for producing rhodium-free catalyst compositions has been on the rise. For this reason, the present inventors have devised a plan to maintain the reduction of nitrogen oxides (NOx) while using little or no rhodium, unlike the conventional TWC catalysts. As the result of the findings, the present inventors have developed rhodium-free catalysts through the synergistic effect of a precious metal, such as platinum-palladium or palladium, and an oxygen storage material. Surprisingly, the rhodium-free catalysts of the present invention show the results of improving the oxidation of hydrocarbons (HC) and carbon monoxide (CO) as well as the reduction of nitrogen oxides (NOx).

Recently, as the price of rhodium, included in the TWC catalyst, has rapidly increased, the manufacturing cost of the TWC catalyst has increased. Therefore, in order to overcome the above problem, the present inventors have researched a catalyst composition which can have the same catalytic efficiency as the TWC catalyst while using little or no rhodium, thus completing the present invention.

An object of the present invention provides a catalyst composition for purifying exhaust gases of an internal combustion engine, in which little or no rhodium is included. Another object of the present invention provides a catalyst composition for purifying exhaust gases of an internal combustion engine, which can decrease the cost of manufacturing a catalyst and can substantially improve the oxidation of hydrocarbons (HC) and carbon monoxide (CO) and the reduction of nitrogen oxides (NOx).

Accordingly, the present invention provides a catalyst for purifying exhaust gases of an internal combustion engine, which is a catalyst of a type commonly called a "Three-Way Conversion (TWC)" catalyst, including a support impregnated with a precious metal component including only platinum and/or palladium and an oxygen storage material including ceria and zirconia, which improves the oxidation of hydrocarbons (HC) and carbon monoxide (CO) and decreases the discharge of nitrogen oxides (NOx). Specifically, the catalyst of the present invention includes: a lower layer including an alumina support and an oxygen storage material; an intermediate layer including alumina support impregnated only with palladium, or with platinum-palladium and a zirconia-rich oxygen storage material; and an upper layer including alumina support impregnated with platinum, minimum rhodium-platinum, or platinum-palladium and a ceria-rich oxygen storage material.

The TWC catalyst is multi-functional in that it can simultaneously catalyze the oxidation of HC and CO and the reduction of NOx. The rhodium-controlled catalyst composition of the present invention, compared to conventional rhodium-containing catalyst compositions, can remarkably decrease the discharge of NOx. It is inferred that this effect is derived from a synergetic effect of a precious metal (platinum or palladium-platinum) and a selected oxygen storage material.

### BRIEF DESCRIPTION OF THE DRAWINGS

The above and other objects, features and advantages of the present invention will be more clearly understood from the following detailed description, taken in conjunction with the accompanying drawings, in which:
FIG. 1 is a schematic view showing multi-layers structures according to Examples and Comparative Example of the present invention;
FIG. 2 is a graph showing LOT measured using catalysts according to the present invention; and
FIG. 3 is a graph showing Sweep (average conversion rate) measured using catalysts according to the present invention.

### DESCRIPTION OF THE PREFERRED EMBODIMENTS

Hereinafter, preferred embodiments of the present invention will be described in detail with reference to the attached drawings.

In an embodiment of the present invention, a catalyst composition includes a support, a precious metal, such as platinum or platinum-palladium, supported in the support, and an oxygen storage material composed of zirconia and ceria. Here, the term "zirconia-rich oxygen storage material" is defined as an oxygen storage material including 50% or more ziconia by weight, and the term "ceria-rich oxygen storage material" is defined as an oxygen storage material including 50% or more ceria by weight. Meanwhile, the term "low alumina" means that, in the case of the support, particularly active alumina, 10% by weight of active alumina is applied in practice based on the total amount of active alumina. Further, in the description of a multi-layers structure, the term "lower layer" refers to a first layer, and the terms "intermediate layer" and "upper layer" refer to a second layer and a third layer, respectively. The term "minimum rhodium" is defined as 2% or less by weight of rhodium based on the total weight of the precious metals used in the catalyst composition.

In another embodiment of the present invention, there is provided a catalyst having a multi-layers structure. The catalyst having a multi-layers structure includes a first layer including a first support and an oxygen storage material containing zirconia-ceria; a second layer including a second support impregnated with a precious metal, such as palladium or platinum-palladium, and a zirconia-rich oxygen storage material; and a third layer including a third support impregnated with a precious metal, such as palladium, platinum-palladium, or minimum rhodium-platinum, and a ceria-rich oxygen storage material.

As described above, the catalyst composition can effectively exhibit TWC function through the synergetic action of platinum or platinum-palladium and an oxygen storage material even though it contains little or no rhodium. The first, second and third supports may be the same as or different from each other, and may be selected from the group consisting of silica, alumina, and titania. Preferably, each of the supports is an active compound selected from the group consisting of alumina, silica, silica-alumina, aluminosilicate, alumina-zirconia, alumina-chromia and alumina-ceria. More preferably, each of the supports is active alumina. In particular, the active alumina of the first layer, as defined above, may be low active alumina. Further, a stabilizer containing barium (Ba) or magnesium (Mg) may be added to each of the upper, intermediate and lower layers.

In the case where the catalyst composition is applied on a monolithic carrier substrate, generally, the component ratio thereof is represented in grams of material per unit volume of catalyst and substrate (g/L). These values include the cell sizes of gas flow passages in various monolithic carrier substrates. The term "precious metal", described in the present application, means a metal which can serve as a catalyst, regardless of the type thereof, such as an element, alloy, or compound, for example, oxides.

### <Example 1>

Slurry for a first layer, prepared by dispersing 40.0 g/ℓ of an oxygen storage material (OSC) in 10.0 g/ℓ of gamma-alumina powder and then milling the mixture, was applied on a ceramic honeycomb structure having a CPSI of 600 cells/inch² and a wall thickness of 4.0 milliinches. Subsequently, slurry for a second layer, prepared by mixing 60.0 g/ℓ of gamma-alumina powder impregnated with 1.75 g/ℓ of palladium nitrate with 30.0 g/ℓ of a zirconia-rich oxygen storage material, was layered and applied on a first layer. Then, slurry for a third layer, prepared by mixing 40.0 g/ℓ of gamma-alumina powder impregnated with 0.25 g/ℓ of platinum chloride with 40.0 g/ℓ of a ceria-rich oxygen storage material, was layered and applied on a second layer. Thereafter, the coated laminate honeycomb structure was dried at a temperature of 120°C for 4 hours, and then baked at a temperature of 550°C for 2 hours, thereby fabricating a first catalyst.

### <Example 2>

The catalyst fabricating process was performed as in Example 1, except that 20% of the palladium component included in the slurry for a second layer was applied to the slurry for a third layer, thereby fabricating a second catalyst.

### <Example 3>

The catalyst fabricating process was performed as in Example 1, except that 10% of the platinum component included in the slurry for a third layer was applied to the slurry for a second layer, and minimum rhodium (0.05 g/ℓ) was applied to the slurry for a third layer, thereby fabricating a third catalyst.

### <Comparative Example 1>

Slurry for a first layer, in which 96.0 g/ℓ of gamma-alumina powder impregnated with 1.75 g/ℓ of palladium nitrate and 17.6 g/ℓ of a low oxygen storage material (OSC) were dispersed, was applied on a ceramic honeycomb structure having a CPSI of 600 cells/inch² and a wall thickness of 4.0 milliinches. Subsequently, slurry for a second layer, prepared by mixing 52.8 g/ℓ of gamma-alumina powder impregnated with 0.25 g/ℓ of rhodium with 44.0 g/ℓ of an oxygen storage material, was layered and applied on a first layer, thereby fabricating a comparative catalyst.

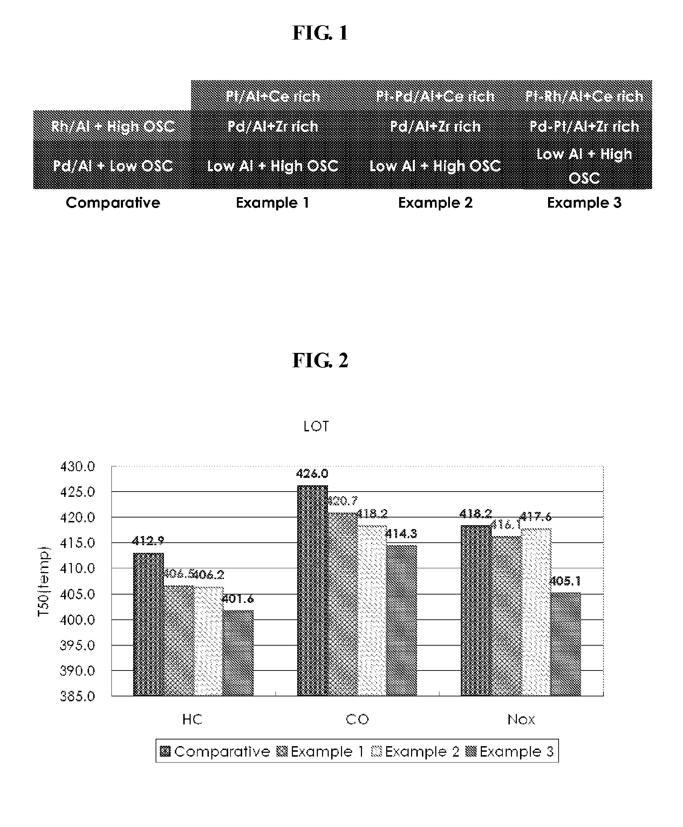

FIG. 1 shows multi-layers structures according to Examples and Comparative Example of the present invention.

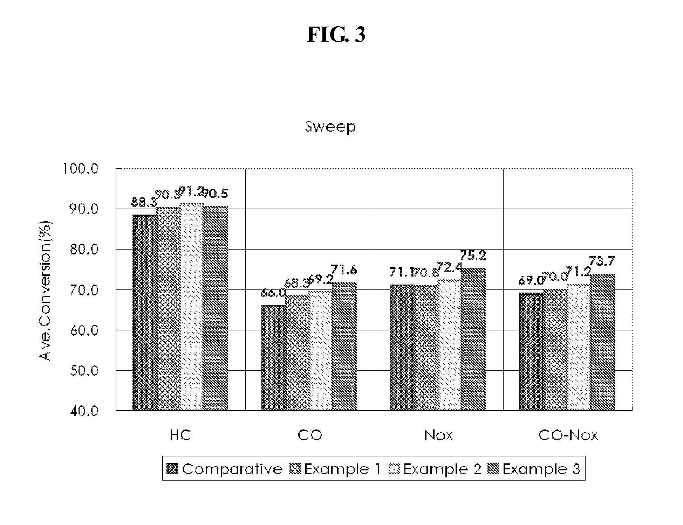

The fabricated catalysts were aged in a furnace at a temperature of 1015°C for 4 hours, and then the LOT (Light-Off Temperature) and Sweep thereof were measured through an engine test, the results of which are shown in FIGS. 2 and 3. The characteristics of the catalyst composition may be determined by the LOT (Light-Off Temperature). Here, the LOT is defined as the temperature at the time when the conversion rate of catalyst is above 50%.

Referring to FIG. 2, it was found that the LOT of hydrocarbons (HC) and carbon monoxide (CO) in the fabricated catalyst, compared to the comparative catalyst, was greatly decreased, and that the LOT of nitrogen oxides (NOx) was also decreased. Furthermore, it was found that the Sweep (average conversion rate) of HC, CO, and NOx was also increased.

According to the present invention, although rhodium, which has been known as an essential component of TWC catalysts, is not used at all or is used at a minimum, the catalysts having excellent LOT (low-temperature activity) and Sweep properties, compared to the comparative catalyst, can be fabricated. It is inferred that these test results are derived from the synergetic effect of precious metal and oxygen storage material and a laminate structure of catalyst.

In these examples, the deNOx and the oxidation of HC and CO can be improved due to the synergetic effect of precious metal and oxygen storage material and the development of a laminate structure of catalyst even though rhodium is not used at all or is used at a minimum, thereby realizing a catalyst composition having economic and technical effects superior to those of conventional catalyst compositions.

Although embodiments of the invention have been described in detail, these embodiments are illustrative, and the scope of the present invention is to be defined based on the accompanying claims.

## Claims

1. A three-way conversion (TWC) catalyst containing little or no rhodium for purifying exhaust gases of an internal combustion engine, having a multi-layers structure, comprising:
a lower layer including an alumina support and an oxygen storage material;
an intermediate layer including alumina support impregnated only with palladium and a zirconia-rich oxygen storage material; and
an upper layer including alumina support impregnated with platinum, minimum rhodium-platinum, or platinum-palladium and a ceria-rich oxygen storage material.

2. A three-way conversion (TWC) catalyst containing little or no rhodium for purifying exhaust gases of an internal combustion engine, having a multi-layers structure, comprising:
a lower layer including a first support and an oxygen storage material containing zirconia-ceria;
an intermediate layer including a second support impregnated with a precious metal, such as palladium or platinum-palladium, and a zirconia-rich oxygen storage material; and
an upper layer including a third support impregnated with a precious metal, such as palladium, platinum-palladium, or minimum rhodium-platinum, and a ceria-rich oxygen storage material.

3. The three-way conversion (TWC) catalyst according to claim 2, wherein each of the first, second and third supports, included in the respective lower, intermediate and upper layers, is an active compound selected from the group consisting of alumina, silica, silica-alumina, aluminosilicate, alumina-zirconia, alumina-chromia and alumina-ceria, in which the first, second and third supports are the same as or different from each other.

4. The three-way conversion (TWC) catalyst according to claim 1, wherein the alumina support, included in the lower layer, is low active alumina.

5. The three-way conversion (TWC) catalyst according to claim 3, wherein the first support, included in the lower layer, is low active alumina.
